# FASCICULE DE BREVET EUROPEEN

(11) **EP 0 655 125 B1**
(45) Date de publication et mention de la délivrance du brevet: **17.11.1999**
(21) Numéro de dépôt: 94919704.0
(22) Date de dépôt: 10.06.1994
(51) Int. Cl.: G01D 5/26, G01K 5/48

(54) **CAPTEUR DE TEMPERATURE MULTIPOINTS RECONFIGURABLE**
WIEDERKONFIGURIERBARER MEHRPUNKTTEMPERATURSENSOR
RECONFIGURABLE MULTIPOINT TEMPERATURE SENSOR

(30) Priorité: 15.06.1993 FR 9307187
(43) Date de publication de la demande: 31.05.1995
(73) Titulaire: THOMSON-CSF, 75008 Paris (FR)
(72) Inventeur: BONNIAU, Philippe, F-92402 Courbevoie Cédex (FR); CHAZELAS, Jean, F-92402 Courbevoie Cédex (FR); TURPIN, Marc, F-92402 Courbevoie Cédex (FR)
(74) Mandataire: Chaverneff, Vladimir
(86) Numéro de dépôt international: FR9400691
(87) Numéro de publication internationale: WO9429675

(56) Documents cités:
- EP-A- 0 377 549
- DE-A- 4 011 440
- JP-A- 59 203 929
- PATENT ABSTRACTS OF JAPAN vol. 12, no. 178 (P-708) 26 Mai 1988 & JP,A,62 288 538 (SUMITOMO ELECTRIC IND LTD) 15 Décembre 1987
- PATENT ABSTRACTS OF JAPAN vol. 5, no. 177 (P-089) 13 Novembre 1981 & JP,A,56 107 137 (TOKYO SHIBAURA DENKI K.K.) 25 Août 1981

## Description

La présente invention se rapporte à un capteur de température multipoints reconfigurable.

Les capteurs de température ou de contraintes à fibres optiques ont fait l'objet de nombreuses études dans le monde. Le domaine des capteurs intrinsèques de température ou de contraintes s'est particulièrement développé grâce à l'utilisation de la fibre optique comme capteur (utilisation de fibres optiques à haute biréfringence ou à maintien de polarisation).

La réalisation de capteurs optiques distribués le long d'une fibre biréfringente a permis de disposer de N capteurs élémentaires correspondant à N segments de fibre capteur. Ces différents segments sont définis par utilisation de points de couplage servant de marqueurs (délimitant ces segments).

La réalisation de points de couplage sur des fibres optiques a été longuement étudiée et on dispose aujourd'hui de différentes techniques de réalisation, parmi lesquelles :
- l'épissurage de deux tronçons de la même fibre, c'est-à-dire une coupure de la fibre et le collage des deux morceaux après avoir fait toumer un des morceaux de la fibre d'un angle quelconque. Les principaux inconvénients de cette méthode sont l'introduction de pertes dues aux réflexions sur les faces des fibres, la maîtrise de l'alignement et de la rotation des coeurs de fibre (de diamètre de l'ordre de 5 µm),
- la fusion de la fibre par échauffement localisé. Un tronçon de la fibre biréfringente de longueur choisie est maintenu à ses extrémités, on toume la fibre à une extrémité, l'autre restant fixe. On crée ainsi une contrainte de torsion. Par échauffement localisé de la fibre, on réalise ainsi un point de couplage de polarisation. Les inconvénients de cette méthode sont l'utilisation d'une fibre localement dénudée, d'un générateur haute tension et d'un arc électrique pour créer le ou les points de couplage et l'irréversibilité de la méthode de création des points de couplage ;
- la réalisation de réseaux d'indice dans la fibre par une méthode de masquage ou par une méthode holographique. La réalisation de points de couplage par cette méthode est principalement étudié aujourd'hui par la Société BERTIN et de nombreuses études ont porté sur la réalisation de réseaux d'indice dans les fibres pour des applications à des capteurs. L'inconvénient de cette méthode réside dans sa complexité de mise en oeuvre, et la nécessité d'utiliser un laser supplémentaire de haute puissance pour produire les réseaux d'indice, et la nécessité de mettre en ouvre un procédé de masquage de la fibre.

On connaît d'après le document DE-A-40 11 440 un dispositif de mesure à fibre optique associée à un matériau à mémoire de forme appliquant une contraction longitudinale à la fibre lorsqu'il prend son état mémorisé. Ce dispositif ne permet pas de mesurer différentes températures ni de faire des mesures en plusieurs points avec la même fibre optique. On connait d'après le document EP 0 377 549 un dispositif de mesure par OTDR des contraintes imposées à une fibre optique, mais cette fibre doit avoir un revêtement spécial. Par ailleurs, on connaît d'après le document JP 59-203920 un dispositif de détermination de franchissement d'un seuil de température déterminée par deux éléments en AMF, mais la détermination se faisant par mesures de pertes, elle limite fortement le nombre de points de mesure, et ne permet pas d'en déterminer l'emplacement.

La présente invention a pour objet un capteur de température multipoints à fibre optique tel que l'on puisse déterminer sur cette fibre optique plusieurs capteurs de température indépendants, dont les emplacements par rapport à la fibre puissent être modifiés à volonté ou puissent être déterminés après installation de la fibre, sans endommager la fibre ou la couper, sans introduire des pertes, sans avoir recours à des équipements supplémentaires, et ce, de la façon la plus simple possible.

Le capteur conforme à l'invention, du type à fibre optique, qui coopère avec une source de lumière, un dispositif de lecture optique de variation de flux lumineux et un élément en alliage à mémoire de forme disposé sur la fibre optique, cet élément étant dimensionné et éduqué de façon que lorsqu'il est porté à des températures situées d'une part de la température critique du matériau le constituant, il n'exerce pratiquement aucune contrainte sur la fibre, et que lorsqu'il est porté à des températures situées d'autre part de ladite température critique, il exerce sur la fibre une contrainte mesurable par ledit dispositif de lecture, et ce capteur est caractérisé par le fait que le capteur est un capteur multipoints comportant plusieurs éléments en alliage à mémoire de forme répartis le long de la fibre optique, chacun des éléments exercant comme contrainte une pression spatialement alternée le long de la fibre, et que le dispositif de lecture est du type à réflectométrie résolue dans le temps (OTDR), déterminant la modification de la répartition des trajets des ondes lumineuses se propageant dans la fibre, modification due aux microcourbures périodiques induites par ladite contrainte.

La présente invention sera mieux comprise à la lecture de la description détaillée de deux modes de réalisation, pris à titre d'exemples non limitatifs et illustrés par le dessin annexé, sur lequel :
- la figure 1 est un bloc-diagramme d'un dispositif capteur conforme à l'invention,
- la figure 2 est une vue en coupe d'un tronçon de fibre optique multimodes sur lequel est disposé un élément en alliage à mémoire de forme, dans son état non contracté, montrant de façon très simplifiée les trajets de propagation d'ondes lumineuses dans ce tronçon,
- la figure 3 est une vue en coupe d'un tronçon de la fibre optique de la figure 2, montrant, de façon très simplifiée le mode d'action sur la propagation des ondes lumineuses d'un élément en alliage à mémoire de forme conforme à l'invention, et
- la figure 4 est une vue en coupe d'un tronçon de fibre optique de la figure 1, sur lequel est disposé un élément en alliage à mémoire de forme conforme à l'invention, dans l'état où il exerce une contrainte sur la fibre optique.

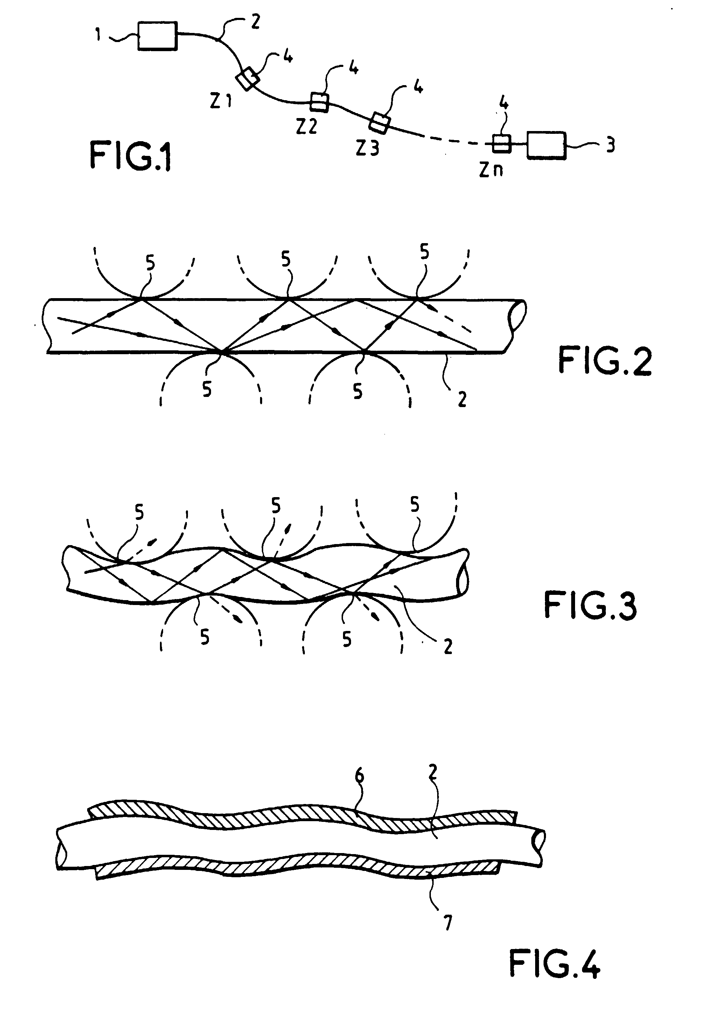

Le capteur à fibre optique schématisé en figure 1 permet de mesurer, de façon connue en soi, des températures (avec une précision relativement peu élevée, mais suffisante dans certains domaines d'application où la température ne constitue pas un paramètre critique) grâce à l'invention. Le dispositif de l'invention permet de déterminer simplement, comme décrit ci-dessous, des températures sans utiliser d'appareillages conventionnels de mesure de température.

Le dispositif capteur de la figure 1 comporte essentiellement une source lumineuse 1, par exemple une source laser dont l'énergie lumineuse est injectée dans une extrémité d'une fibre optique par exemple une fibre multimode 2 dont l'autre extrémité est couplée à un dispositif de lecture 3 mettant en oeuvre par exemple la réflectométrie résolue dans le temps, connue sous la dénomination anglo-saxonne OTDR (Optical Time Domain Reflectometry) Les éléments 1 à 3 étant bien connus en soi, ne seront pas décrits.

De nombreux travaux sur les capteurs à fibre optique ont porté sur la mesure de pertes d'intensité lumineuse induites par des contraintes appliquées sur la fibre optique. Plus spécialement, les études ont porté sur la réalisation de capteurs à fibre optique à microcourbures utilisant des fibres optiques soit monomode soit multimodes. La possibilité de réaliser un système de mesure à bas coût a orienté les travaux vers les fibres optiques multimodes. Le principe de fonctionnement de tels capteurs de contraintes mécaniques est le suivant : lorsqu'une fibre optique multimodes est soumise à une pression spatialement alternée de part et d'autre, le long de la fibre, des pertes optiques apparaissent, qui sont dues aux pertes de propagation de modes d'ordres supérieurs. La réalisation de capteurs de contrainte à fibres optiques s'est développée dans deux directions principales en fonction du système de lecture adopté. Les mesures des pertes d'intensité lumineuse peuvent être réalisées à l'aide d'un simple photodétecteur et, dans ce cas, les pertes sont cumulées sur toute la longueur du capteur. La mesure peut être également effectuée par réflectométrie résolue dans le temps (OTDR), et dans ce cas on peut localiser les emplacements des capteurs.

En général, la fibre 2 sert de multicapteurs de grandeurs physiques. Au lieu de réaliser des points de couplage selon l'un des procédés connus décrits ci-dessus en préambule, en vue de délimiter des capteurs de grandeurs mécaniques, l'invention prévoit de réaliser en Z1, Z2, ... des zones servant de capteurs de températures, et, de plus, de les rendre facilement réversibles, ce qui permet, principalement, de reconfigurer l'arrangement des capteurs de température (pour en supprimer ou en ajouter, ou pour en déplacer un ou plusieurs) sans endommager la fibre. Selon l'invention, chaque zone de capteur de température est réalisée à l'aide d'un élément 4 en alliage à mémoire de forme (AMF).

Ces matériaux AMF sont étudiés depuis de nombreuses années, dans le monde (voir en particulier l'article "Shape Memory Alloys" paru dans Scientific American, les publications "Shape Memory Alloys: materials in action" et "General discussions: the use of Shape Memory Actuators" de l'Université Catholique de Louvain).

Les matériaux principalement utilisés sont de type Ni-Ti ou des alliages de cuivre de type Cu-Al-Zn ou Cu-Al-Ni et l'effet mémoire est basé sur une transition de type martensitique-austénitique obtenue en faisant varier la température de l'alliage étudié, et à cet effet mémoire est associé un changement de l'arrangement cristallographique induisant un changement de forme de l'alliage.

La plage de températures de transition varie d'un type d'alliage à l'autre et est généralement située entre -100 et +200°C environ. Deux types d'effet mémoire sont à distinguer: l'effet mémoire simple sens et l'effet mémoire double sens. L'effet mémoire double sens correspond au passage réversible d'une forme haute température à une forme basse température, par un simple changement de température. L'effet simple sens ne correspond qu'à la mémorisation d'une seule forme (haute ou basse température). La réalisation de ressorts, de fils, de plaques en alliages à mémoire de forme a trouvé de nombreuses applications dans tous les domaines allant de la chirurgie dentaire à l'automobile en passant par les appareils ménagers (quelques applications potentielles identifiées sont regroupées dans l'article de M. van Humbeek: "From a seed to a need : the growth of shape memory applications in Europe").

Selon l'invention, on réalise chaque zone de capteur de température à l'aide d'un élément en AMF. De préférence, cet élément est du type à effet mémoire double sens, et exerce, dans l'une de ses formes mémorisées (à haute ou à basse température) des contraintes sur la fibre. Ces contraintes induisent des micro-courbures atténuant sensiblement certains modes de propagation d'ordre supérieur.

Selon un mode de réalisation préféré de l'invention, l'élément en AMF est en forme d'hélice tubulaire à spires non jointives. Selon un autre mode de réalisation de l'invention, l'élément en AMF a une forme générale de soufflet tubulaire. Selon encore un autre mode de réalisation, l'élément en AMF comporte, comme représenté en figure 4, deux plaques ondulées 6,7 reliées entre elles par exemple par des vis, et qui sont avantageusement cintrées. Ces deux plaques sont décalées l'une par rapport à l'autre de façon à faire légèrement onduler la fibre optique, dans l'une de leurs formes mémorisées. Le diamètre intérieur de l'hélice est choisi, pour l'une des formes mémorisées, égal ou légèrement supérieur au diamètre extérieur de la fibre. Ce diamètre extérieur de la fibre est généralement compris entre 250 µm environ (par exemple pour une fibre à maintien de polarisation à revêtement époxy-acrylate) et quelques millimètres. L'alliage AMF et le diamètre du fil utilisé pour réaliser l'hélice sont choisis de façon que pour l'autre forme mémorisée l'élément en AMF exerce sur la fibre 2 une contrainte suffisamment importante pour pouvoir être détectée par le lecteur 3, sans toutefois dépasser la limite élastique de déformation de la silice constituant la fibre. Dans le cas où il y aurait un tel risque, on peut munir la fibre d'un manchon protecteur (par exemple en matière plastique ou en PTFE) à l'endroit où l'on va disposer l'élément en AMF. Bien entendu, dans un tel cas, le diamètre intérieur de l'hélice tient compte de l'épaisseur de ce manchon.

L'hélice peut être conformée soit avant son installation autour de la fibre, soit directement enroulée sur la fibre optique. Dans le premier cas, l'hélice, formée de quelques spires, généralement jointives, de fil en AMF, est glissée le long de la fibre optique jusqu'à la position désirée. Dans le deuxième cas, le fil en AMF est enroulé ou bobiné (avantageusement par la technique dite de "wrapping") autour de la fibre optique à la position désirée. Dans les deux cas, l'installation de l'élément en AMF est effectuée à la température pour laquelle l'élément en AMF a sa forme "dilatée" (forme correspondant à une hélice de diamètre intérieur égal ou supérieur au diamètre extérieur de la fibre). Généralement, l'élément en AMF est tel que sa forme "dilatée" est obtenue lorsqu'il est porté à une température inférieure à la température de transition de l'AMF. Cette température de transition peut être choisie entre -100°C et +200°C environ en fonction de l'alliage utilisé, et dans ce cas général, elle est choisie inférieure à la température minimale de fonctionnement prévue des éléments AMF. Toutefois, il est bien entendu que le cas inverse (forme "dilatée" correspondant à des températures supérieures à la température de transition de l'AMF) peut être envisagé.

Au-dessus de la température de transition, le diamètre de l'hélice diminue, créant ainsi une contrainte sur la fibre et induit une perte localisée du flux lumineux guidé par cette fibre optique.

On a représenté, de façon schématique, en figure 2 un tronçon 4 de la fibre optique 2, et les parties 5 des spires d'une hélice à spires non jointives en matériau AMF en contact avec la fibre optique. A l'état "dilaté" de l'élément en AMF, ses spires n'exercent aucune contrainte sur la fibre 2. Les trajets de propagation des ondes lumineuses dans la fibre 2 sont les trajets habituels dans un tel cas.

A l'état "contracté" de l'élément en AMF (figure 3), les parties 5 de l'hélice en contact avec la fibre 2 s'enfoncent légèrement dans celle-ci et créent des déformations de l'interface fibre/air. Ces déformations modifient la répartition des trajets des ondes lumineuses qui se propagent dans la fibre 2, du fait que les modes d'ordre élevé ne sont alors plus guidés. Ce phénomène est dû aux microcourbures périodiques induites sur la fibre par la contraction de l'hélice . Ces modifications sont mesurées, de façon connue en soi, à l'aide du dispositif de lecture 2. Par le choix de l'alliage AMF de l'hélice, on ajuste sa température de transition. Par conséquent, lorsque le réflectomètre 3 détecte une variation du flux lumineux due à la contraction de l'hélice en question, dont il peut facilement déterminer l'emplacement par rapport à la fibre 2, on sait qu'à cet emplacement la température de transition en question a été franchie. Si, par exemple, cette température correspond à celle du début de combustion des matériaux environnant la fibre optique 2 avec son hélice en AMF, on réalise ainsi un détecteur d'incendie.

Pour ajuster la sensibilité du capteur de température réalisé avec une telle fibre optique, l'hélice en matériau AMF applique sur la fibre optique des contraintes de façon spatialement périodique. La période spatiale est calculée, de façon connue en soi (voir par exemple le livre "Optical Fiber Sensors" de B. CULSHAW et J. DAKIN, Vol. 2, 1989 aux Editions Artech House) en fonction de l'écart entre les constantes de propagation des modes d'ordre élévé qui se propagent dans la fibre.

En-dessous de la température de transition, le matériau AMF relâche les contraintes exercées sur la fibre optique. Par conséquent, la formation de la zone de mesure est réversible. On peut donc soit supprimer la zone de mesure, soit la déplacer. Bien entendu, il en est de même pour toutes les zones de mesure PC1, PC2, ...

Selon un premier mode de réalisation de l'invention, on réalise un système multi-capteurs à l'aide d'au moins une fibre optique le long de laquelle on dispose plusieurs hélices identiques en AMF telles que celle décrite ci-dessus, déterminant chacune une zone de mesure. L'adressage et la lecture des capteurs répartis le long de la fibre optique 2 et correspondant à ces zones de mesure sont effectués de manière connue en soi par réflectométrie en reliant, comme précisé ci-dessus, une extrémité de la fibre 2 à une source lumineuse 1, et l'autre extrémité à un réflectomètre 3. Il en est de même pour tous les autres modes de réalisation de l'invention.

Selon un autre mode de réalisation de l'invention, les hélices en AMF ont des compositions différentes, et donc des températures de transitions différentes. On constitue ainsi un système multi-capteurs à capteurs répartis. Ces capteurs permettent alors de mesurer plusieurs températures différentes (ou des franchissements de différents seuils de températures) en un même endroit ou en des endroits différents.

Selon un exemple de réalisation de l'invention, une hélice en AMF est réalisée à partir d'un fil en AMF d'un diamètre d'environ 60 µm bobiné sur une fibre optique d'un diamètre d'environ 250 µm. L'alliage AMF est par exemple de type Cu-Al-Ni ou Ni-Ti. La longueur de l'hélice est alors inférieure à 1 mm et l'hélice comporte une dizaine de spires non jointives.

Les applications du dispositif de l'invention sont nombreuses, en particulier dans les cas où l'on utilisait déjà des fibres optiques à zones de mesure fixes et irréversibles. L'invention permet, dans ces cas, de modifier les emplacements des zones de mesure.

En résumé, le dispositif de l'invention permet de réaliser de façon simple des capteurs de température. Les températures de fonctionnement de tels capteurs peuvent être situées dans une large fourchette de valeurs (-100°C à +200°C environ, actuellement). Dans tous les cas, les zones de mesure sont réversibles, sans endommager la fibre optique.

## Revendications

1. Capteur de température comportant une fibre optique (2) coopérant avec une source de lumière (1), un dispositif de lecture optique de variation de flux lumineux F (3), et un élément en alliage à mémoire de forme (4) disposé sur la fibre optique, cet élément étant dimensionné et éduqué de façon que lorsqu'il est porté à des températures situées d'une part de la température de transition du matériau le constituant, il n'exerce pratiquement aucune contrainte sur la fibre, et que lorsqu'il est porté à des températures situées d'autre part de ladite température de transition, il exerce sur la fibre une contrainte mesurable par ledit dispositif de lecture, caractérisé par le fait que le capteur est un capteur multipoints comportant plusieurs éléments (4) en alliage à mémoire de forme répartis le long de la fibre optique, chacun des éléments exerçant comme contrainte une pression spatialement alternée le long de la fibre, et que le dispositif de lecture est du type à réflectométrie résolue dans le temps (OTDR), déterminant la modification de la répartition des trajets des ondes lumineuses se propageant dans la fibre, modification due aux microcourbures périodiques induites par la dite contrainte.

2. Capteur selon la revendication 1, caractérisé par le fait que la période spatiale des contraintes est calculée en fonction de l'écart entre les constantes de propagation des modes d'ordre élevé qui se propagent dans la fibre.

3. Capteur selon la revendication 1 ou 2, caractérisé par le fait que l'élément en alliage à mémoire de forme a une forme d'hélice tubulaire.

4. Capteur selon la revendication 1 ou 2, caractérisé par le fait que l'élément en alliage à mémoire de forme a une forme de soufflet ondulé.

5. Capteur selon la revendication 1 ou 2, caractérisé par le fait que l'élément en alliage à mémoire de forme comporte deux plaques ondulées (6, 7).

6. Capteur selon l'une des revendications précédentes, caractérisé par le fait qu'il comporte plusieurs éléments en alliage à mémoire de forme à températures de transition différentes.

## Patentansprüche

1. Temperatursensor, mit einer Lichtleitfaser (2), die mit einer Lichtquelle (1), einer optischen Vorrichtung zum Lesen der Änderung des Lichtstroms F (3) und einem Element (4) aus einer formerhaltenden Legierung, das an der Lichtleitfaser angeordnet ist, zusammenwirkt, wobei dieses Element so dimensioniert und beschaffen ist, daß es dann, wenn es auf Temperaturen gehalten wird, die auf einer Seite der Umwandlungstemperatur des es bildenden Materials liegen, im wesentlichen auf die Faser keine Beanspruchung ausübt, und daß es dann, wenn es auf Temperaturen gehalten wird, die auf der anderen Seite der Umwandlungstemperatur liegen, auf die Faser eine von der Lesevorrichtung meßbare Beanspruchung ausübt, dadurch gekennzeichnet, daß der Sensor ein Mehrpunktsensor ist, der mehrere Elemente (4) aus einer formerhaltenden Legierung umfaßt, die längs der Lichtleitfaser verteilt sind, wobei jedes der Elemente als Beanspruchung einen längs der Faser abwechselnden räumlichen Druck ausübt, und daß die Lesevorrichtung vom Typ mit zeitlich aufgelöster Reflektometrie (OTDR) ist, die die Modifikation der Verteilung der Wege der in der Faser sich ausbreitenden Lichtwellen bestimmt, wobei die Modifikation durch periodische Mikrokrümmungen bedingt ist, die durch die Beanspruchung eingeführt werden.

2. Sensor nach Anspruch 1, dadurch gekennzeichnet, daß die räumliche Periode der Beanspruchungen in Abhängigkeit vom Abstand zwischen den Ausbreitungskonstanten der in der Faser sich ausbreitenden Harmonischen hoher Ordnung berechnet wird.

3. Sensor nach Anspruch 1 oder 2, dadurch gekennzeichnet, daß das Element aus einer formerhaltenden Legierung eine röhrenförmige Schraubenlinienform besitzt.

4. Sensor nach Anspruch 1 oder 2, dadurch gekennzeichnet, daß das Element aus einer formerhaltenden Legierung eine Form eines gewellten Balgs besitzt.

5. Sensor nach Anspruch 1 oder 2, dadurch gekennzeichnet, daß das Element aus einer formerhaltenden Legierung zwei gewellte Platten (6, 7) enthält.

6. Sensor nach einem der vorangehenden Ansprüche, dadurch gekennzeichnet, daß er mehrere Elemente aus einer formerhaltenden Legierung mit unterschiedlichen Umwandlungstemperaturen enthält.

## Claims

1. Temperature sensor composed of an optical fibre (2) interacting with a light source (1), a device (3) for optically reading a variation in light flux F and an element (4) made of a shape-memory alloy arranged on the optical fibre, this element being designed and taught so that when it is at temperatures lying on the side of the transition temperature of the constituent material it exerts virtually no stress on the fibre, and when it is at temperatures lying on the other side of the said transition temperature it exerts on the fibre a stress which can be measured by the said read device, characterized in that the sensor is a multipoint sensor composed of several elements (4) made of a shape-memory alloy which are distributed along the optical fibre, each of the elements exerting, as stress, a pressure that alternates spatially along the fibre and in that the read device is of the time-domain reflectometry (OTDR) type, determining the change in the distribution of the paths of the light waves propagating in the fibre, which change is due to the periodic microbending induced by the said stress.

2. Sensor according to Claim 1, characterized in that the spatial period of the sresses is calculated on the basis of the difference between the propagation constants of the high-order modes which propagate in the fibre.

3. Sensor according to Claim 1 or 2, characterized in that the element made of a shape-memory alloy has a tubular helical shape.

4. Sensor according to Claim 1 or 2, characterized in that the element made of a shape-memory alloy has a corrugated-concertina shape.

5. Sensor according to Claim 1 or 2, characterized in that the element made of a shape-memory alloy is composed of two corrugated plates (6, 7).

6. Sensor according to one of the preceding claims, characterized in that it is composed of several elements made of a shape-memory alloy having different transition temperatures.
